# EUROPEAN PATENT APPLICATION

(11) **EP 4 201 169 A1**
(43) Date of publication of application: **28.06.2023**
(21) Application number: 21217301.7
(22) Date of filing: 23.12.2021
(51) Int. Cl.: A01B 39/18, A01M 21/02

(54) **A WEED REMOVING VEHICLE**

(71) Applicant: Trabotyx B.V., 5222 AV 's-Hertogenbosch (NL)
(72) Inventor: Boussama, Mohamed DhiaEddine, 2073 Ariana, Tunis (TN); Kreukniet, Tim, 3531 PK Utrecht (NL); Kerkhof, Patrick Lambertus, 2716 LX Zoetermeer (NL)
(74) Representative: De Vries & Metman

(57) **Abstract**

A weed removing vehicle (1) comprises a frame (7, 21), a driving device for driving the weed removing vehicle (1) in a direction of movement (X) and a weed recognition system (13) for determining a location of weed (W) to be removed, a stabbing element (15) being mounted to the frame (7, 21) and having a free distal end (16) for removing weed (W) and an opposite proximal end (17), and a displacing device (19, 24, 25) for moving the stabbing element (15) relative to the frame (7, 21) in a forward movement to the weed (W) recognized by the weed recognition system (13) and a return movement. The displacing device (19, 24, 25) is adapted such that in the forward movement the distal end (16) follows a kinked path comprising a downwardly directed first path section and a second path section, wherein a transition between the first and second path sections creates the kinked path.

## Description

The present invention relates to a weed removing vehicle, comprising a frame, a driving device for driving the weed removing vehicle in a direction of movement and a weed recognition system for determining a location of weed to be removed.

Weeds near cultivated plants, such as food crops, are undesired since they consume water and nutrients intended for the cultivated plants. Besides, weeds may also obstruct sun light to the cultivated plants, hence adversely affecting their growing performance. Certain weed plants are very aggressive and grow very fast. Weeds can be eliminated by using herbicides, but these have well-known disadvantages. Therefore, there is a growing interest in mechanical eradication of weeds. Weed removing vehicles including vision-based weed recognition systems which discriminate between weeds and desired crops are known in the prior art.

An object of the invention is to provide an improved weed removing vehicle.

This object is accomplished with the weed removing vehicle according to the invention, which comprises a stabbing element being mounted to the frame and having a free distal end for removing weed and an opposite proximal end, and a displacing device for moving the stabbing element relative to the frame in a forward movement to the weed recognized by the weed recognition system and a return movement, wherein the displacing device is adapted such that in the forward movement the distal end follows a kinked path comprising a downwardly directed first path section and a second path section, wherein a transition between the first and second path sections creates the kinked path.

The transition between the first and second path sections directs the motion of the distal end in a different direction than the direction which is followed along the first path section. This enables the distal end to perform a throwing or pulling motion after a stabbing motion along the first path section. For example, the distal end can be moved to the weed plant to be removed and inserted into the soil such that it is below the weed plant at the end of the first path section, after which the throwing or pulling motion can tear the weed plant out of the soil, possibly together with the roots of the weed plant. This is typically advantageous in case of weed plants which are still relatively small with respect to the crop. In an early period of growing crops weed plants may be equal in size to the crops, or even bigger.

It is noted that the transition between the first path section and the second path section may have different shapes. The transition may be formed by a critical point where the gradient of the path is undefined, hence a sudden change of direction of movement of the distal end, but it may also be formed by a gradual curve which has a gradient that is larger than a gradient of the first path section adjacent to the transition in order to create a gradual change of direction of movement of the distal end.

The weed recognition system may be provided with an image capturing device such as a ground facing camera. The weed recognition system may further comprise a processor to run image recognition software so as to identify weeds and their locations.

In practice the forward movement and return movement may be performed reciprocatingly. A total cycle time of the forward and return movement may be shorter than 2 seconds, preferably shorter than 1 second or even shorter than half a second.

The first path section may be substantially linear. The substantially linear first path section enables the free distal end of the stabbing element to arrive quickly at a weed plant to be removed, since it travels along a relatively short route. The second path section may also be substantially linear, but it may also be curved.

The displacing device may be adapted such that during the forward movement the distal end moves within an imaginary plane, which is angled with respect to a horizontal plane and to the direction of movement of the weed removing vehicle. The imaginary plane may be substantially perpendicular to the horizontal plane and the direction of movement of the weed removing vehicle such that during the forward movement the distal end moves in a direction perpendicularly to the direction of movement of the weed removing vehicle.

In a particular embodiment, the first path section is inclined with respect to a vertical line, whereas the displacing device is adapted such that during the forward movement the distal end moves upwardly along the second path section. This means that a dislodged weed plant can be lifted or thrown in upward direction such that it lands on top of the soil where it will wither. The second path section may also be inclined with respect to a vertical line.

Preferably, the displacing device is adapted such that the distal end follows the first and second path sections during the return movement in opposite direction with respect to the forward movement, since this provides the opportunity to apply a simple mechanism.

In practice the stabbing element comprises an elongated body, for example a thin blade-shaped tool which can at least partly penetrate into the soil without unnecessarily affecting the soil structure.

The displacing device may be adapted such that the distal end follows a direction from the proximal end towards the distal end along the first path section. If the stabbing element comprises an elongated body it may move in alignment with itself in order to follow a pure stabbing motion.

The distal end may comprise a cutting edge, such as a knife edge.

Preferably, the distal end is arrow-shaped in order to minimize friction upon penetrating the soil.

It is also conceivable to apply an inverted arrow shape such that a weed plant stem is caught between projections of the inverted arrow shape. This may facilitate pulling out a weed plant including its roots from the soil.

The stabbing element may be gouge-shaped.

In a practical embodiment the displacing device comprises a linear actuator, of which a first end is mounted to the frame and an opposite second end is mounted to the stabbing element through a first pivot having an axis of rotation, wherein the linear actuator is adapted and controllable such that during the forward movement the second end is moved with respect to the first end from a retracted position to an extended position, and wherein the displacing device comprises a rotating system for rotating the stabbing element with respect to the second end about the axis of rotation of the first pivot, wherein the rotating system is adapted such that it rotates the stabbing element when the second end is moved with respect to the first end to the extended position from an intermediate position, that lies between the retracted position and the extended position, hence forcing the distal end to follow the second path section.

The rotating system may comprise a shoe which is movably mounted to the frame and also mounted to the stabbing element through a second pivot that has an axis of rotation which is parallel to the axis of rotation of the first pivot and located at a distance therefrom in transverse direction of a line along which the linear actuator operates, wherein the shoe and the frame are provided with a stop mechanism which is adapted such that when the second end is moved with respect to the first end from the retracted position to the extended position the shoe is stopped with respect to the frame at the intermediate position of the second end. This means that when the second end is moved with respect to the first end from the intermediate position to the extended position the first pivot moves in the same direction as the second end causing the stabbing element to rotate about the axis of rotation of the second pivot. The second path is curved in this case.

In an alternative embodiment the displacing device comprises a linear actuator, of which a first end is mounted to the frame through an actuator pivot including an axis of rotation and an opposite second end is fixed to the stabbing element, wherein the linear actuator is adapted and controllable such that during the forward movement the second end is moved with respect to the first end from a retracted position to an extended position, and wherein the displacing device comprises a rotating system for rotating the linear actuator about the axis of rotation, wherein the rotating system is adapted such that it rotates the linear actuator when the second end is moved with respect to the first end to the extended position from an intermediate position, that lies between the retracted position and the extended position, hence forcing the distal end to follow the second path section. This means that the distal end follows the first path section when the second end of the linear actuator moves from the retracted position to the intermediate position, whereas it follows the second path section when the second end of the linear actuator moves from the intermediate position to the extended position.

The rotating system may comprise a guide mechanism between the second end of the linear actuator and the frame, which guide mechanism is provided with a cam and a guide which engage each other between the intermediate position and the extended position of the second end. An advantage of this embodiment is that the entire forward movement can be performed by the linear actuator only.

In a practical embodiment the cam is mounted to the frame and the guide is mounted to the second end of the linear actuator.

The linear actuator may comprise a pneumatic cylinder, but alternative actuators are conceivable, for example a hydraulic or electric actuator.

In an embodiment the frame is mounted to a chassis of the vehicle and liftable with respect to the chassis, displaceable with respect to the chassis in a direction which is angled with respect to the direction of movement of the weed removing vehicle and an upwardly directed axis and rotatable with respect to the chassis about the upwardly directed axis. This provides the opportunity for correction of the location and orientation of the stabbing element when the vehicle rides on uneven soil. The vehicle may be provided with a control system which moves the frame with respect to the chassis such that the frame remains parallel to the upper surface of the soil, for example horizontal.

The weed removing vehicle may be an autonomously operating weed removing vehicle so as to autonomously weed a field around cultivated plants. The weed removing vehicle may also be a semi-autonomously operating weed removing vehicle, for example wherein the weed removing function is automized, but wherein the vehicle is moved forwardly manually.

The invention will hereafter be elucidated with reference to very schematic drawings showing an embodiment of the invention by way of example.
Fig. 1 is a perspective view of a part of an embodiment of a weed removing vehicle according to the invention.
Fig. 2 is a similar view as Fig. 1, showing a part thereof.
Fig. 3 is a similar view as Fig. 1, showing a part thereof on a larger scale.
Fig. 4 is a similar view as Fig. 3, showing the part as seen from a different side.
Fig. 5 is a similar view as Fig. 1, showing an enlarged part thereof.
Figs. 6-8 are similar views as Fig. 5, showing a part thereof and illustrating an operating condition of the weed removing vehicle.
Fig. 9 is an exploded view of the part as shown in Figs. 6-8.
Figs. 10-12 are sectional views of the part as shown in Figs. 6-8, illustrating the same operating condition of the weed removing vehicle.
Figs. 13-15 are similar views as Figs. 10-12, showing the part of an alternative embodiment of the weed removing vehicle.

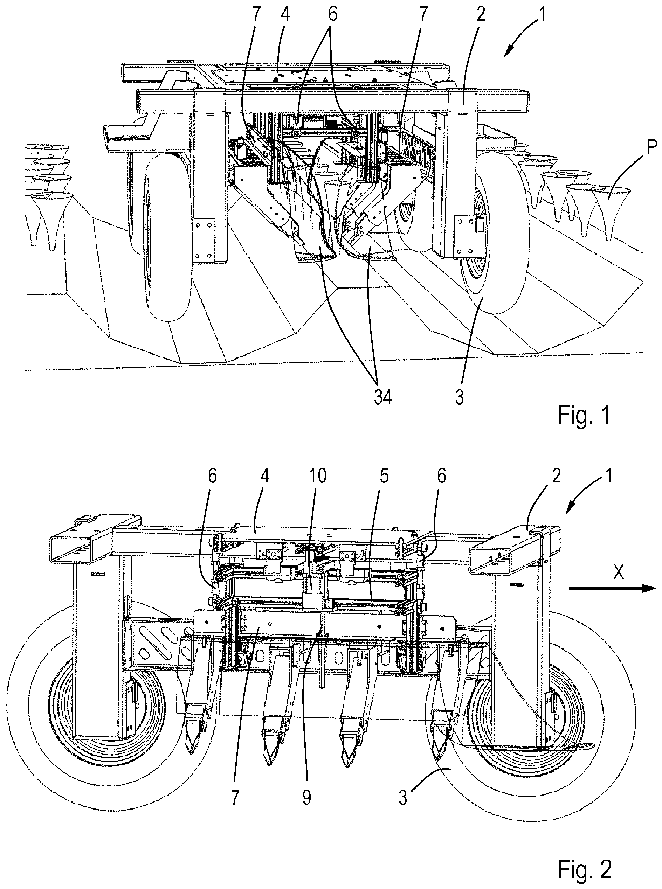

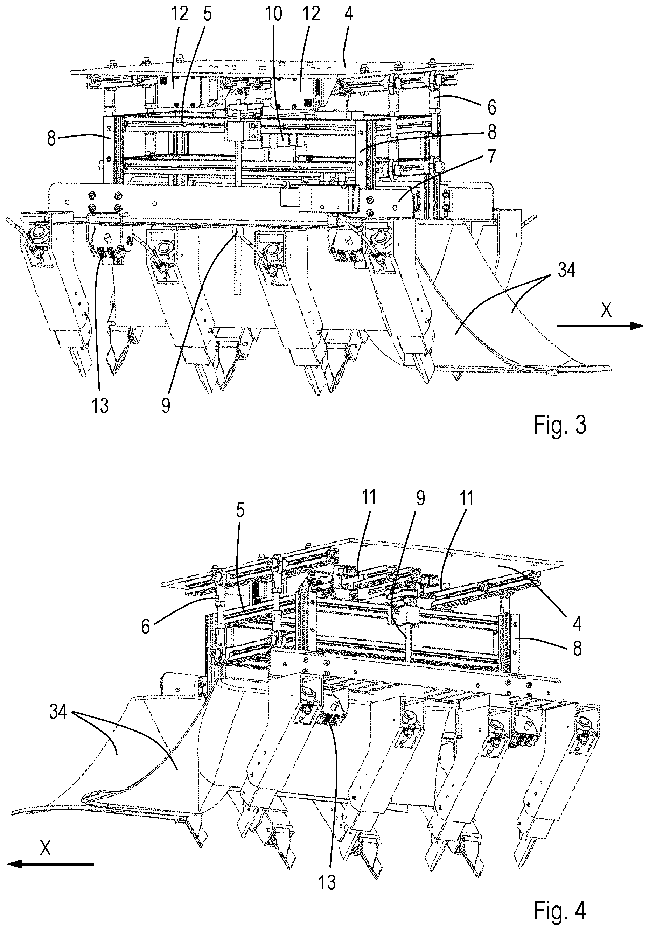

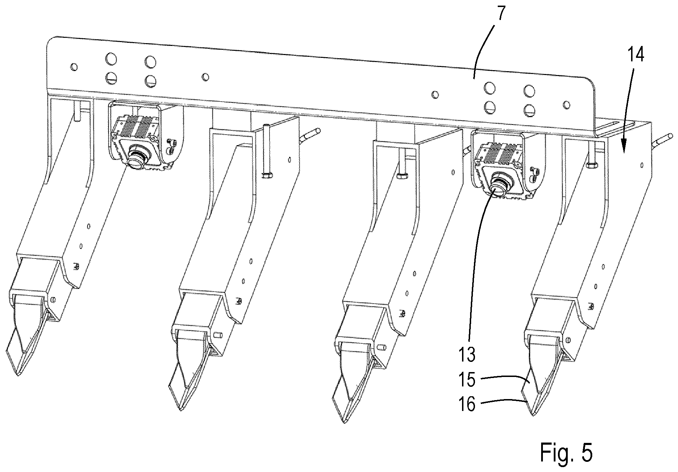

Figs. 1-12 show parts of an embodiment of a weed removing vehicle 1 according to the invention. The vehicle 1 has a chassis 2, four wheels 3 and a driving device (not shown) for driving at least one of the wheels 3 so as to drive the vehicle 1 in a direction of movement X, which is from the left to the right in Fig. 2. In practice the direction of movement X of the weed removing vehicle 1 may be parallel to rows of cultivated plants P as illustrated in Fig. 1.

A horizontally oriented bearing plate 4 is fixed to the chassis 2. A main frame 5 suspends from the bearing plate 4 through four rods 6. Each of the rods 6 is mounted to the bearing plate 4 through a ball joint and to the main frame 5 through a ball joint.

Two subframes 7 are mounted to the main frame 5. In this case the subframes 7 are identical and mirror symmetrical with respect to a vertical plane which extends in the direction of movement X of the weed removing vehicle 1. Each of the subframes 7 is liftable with respect to the main frame 5 along guides 8 thereof by means of a spindle mechanism 9 which is drivable via a transmission by an electric motor 10, but numerous alternative lifting mechanisms are conceivable.

The main frame 5 is movable with respect to the bearing plate 4 in a direction which is angled with respect to the direction of movement X, in this case perpendicularly to the direction of movement X, and parallel to the bearing plate 4 by means of two spindle mechanisms 11 which are drivable by respective electric motors 12. Furthermore, the main frame 5 is rotatable with respect to the bearing plate 4 about an axis which is angled, in this case perpendicular, with respect to the plane of the bearing plate 4 by operating the electric motors 12 of the spindle mechanisms 11 in opposite directions.

Each of the subframes 7 is provided with two cameras 13 which are located at a distance from each other in the direction of movement X and which are part of a weed recognition system. The cameras 13 are directed to the soil below the vehicle 1 and electronically connected to an imaging processor (not shown) of the weed recognition system for determining the location of weed to be removed.

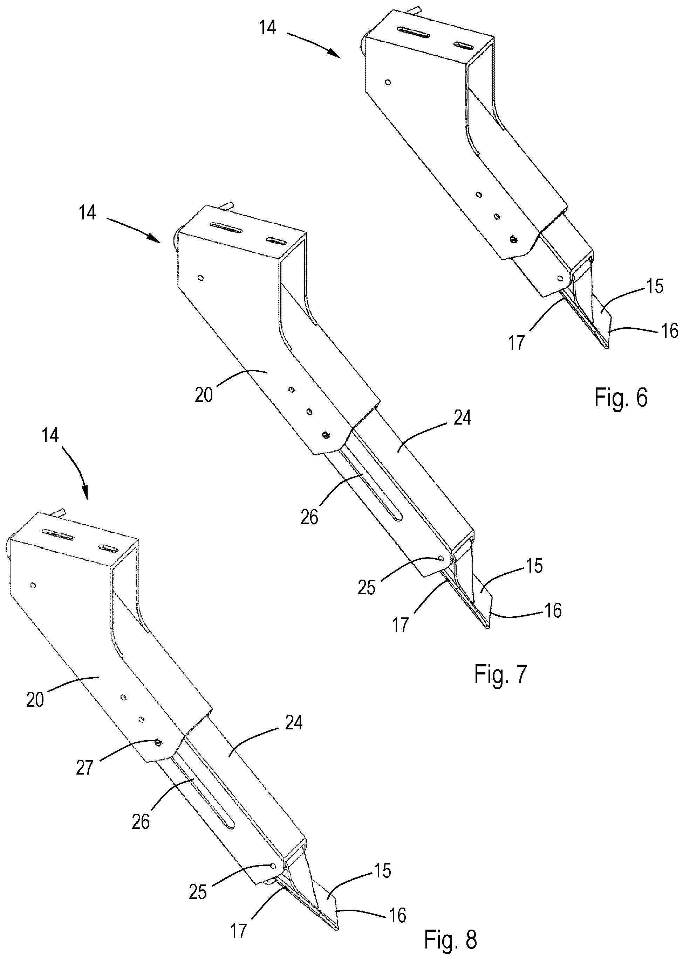

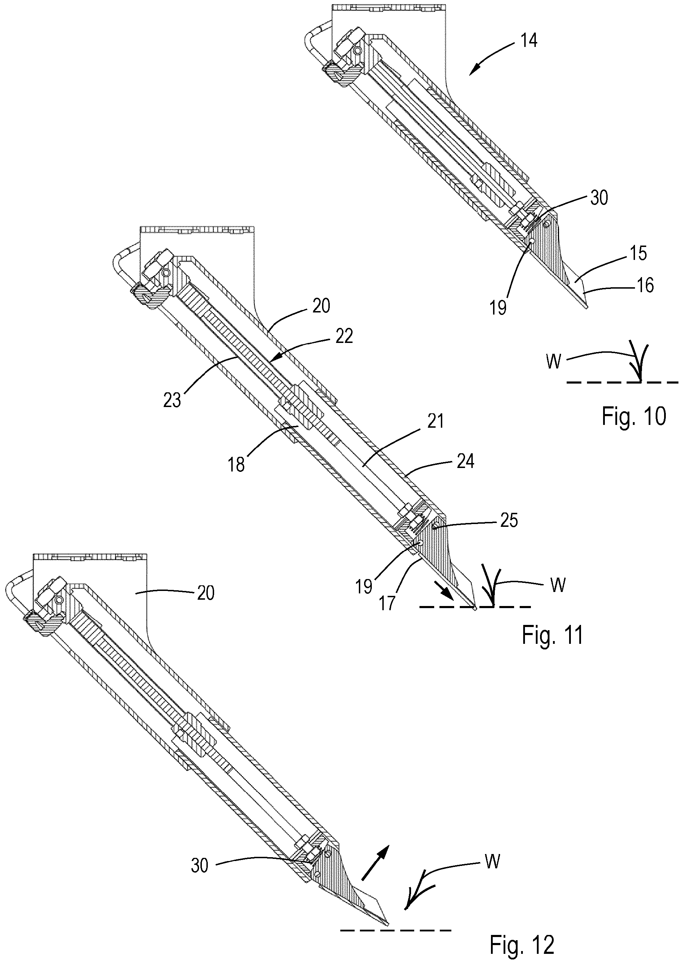

Each of the subframes 7 is also provided with four weeding tools 14 which are located at a distance from each other in the direction of movement X of the weed removing vehicle 1. The composition of one of the weeding tools 14 and its functioning under operating conditions are shown in detail in Figs. 6-12. Figs. 10-12 also show a weed plant W in the soil. Each of the weeding tools 14 comprises an elongated gouge-shaped stabbing element 15 including an arrow-shaped cutting edge 16 at a free distal end thereof. The stabbing element 15 has also a proximal end 17 at a distance from the cutting edge 16. The proximal end 17 is mounted to an intermediate element 18 through a first pivot 19 which has an axis of rotation which has a component that is parallel to the direction of movement X of the weed removing vehicle 1. In this case the axis of rotation is parallel to the direction of movement X. The intermediate element 18 comprises a U-beam, but a different shape is possible.

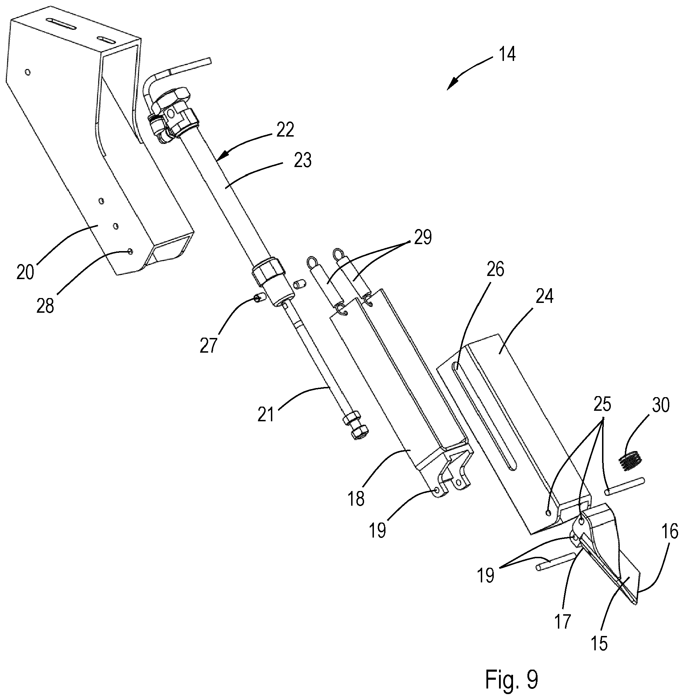

The intermediate element 18 is slidably mounted to a housing 20 which is fixed to the subframe 7. Fig. 9 shows that two springs 29 are mounted between the housing 20 and the intermediate element 18. The intermediate element 18 is fixed to a piston rod 21 of a linear actuator in the form of a pneumatic cylinder 22, which piston rod 21 is displaceable with respect to a cylinder body 23 of the pneumatic cylinder 22. The pneumatic cylinder 22 is controllable such that the piston rod 21 is movable with respect to the cylinder body 23 between a retracted position and an extended position. The pneumatic cylinder 22 operates along a line which is angled with respect to a vertical line.

The proximal end 17 of the stabbing element 15 is mounted to a shoe 24 through a second pivot 25, which has an axis of rotation that is parallel to the axis of rotation of the first pivot 19. The axes of the first and second pivots 19, 25 are located at a distance from each other in transverse direction of the line along which the pneumatic cylinder 22 operates. In this case the shoe 24 comprises a U-beam in which the intermediate element 18 fits. The shoe 24 is slidable with respect to the intermediate element 18 and the housing 20 and the pneumatic cylinder 22 is surrounded by the intermediate element 18 and the shoe 24. The shoe 24 is provided with opposite slots 26 in which respective stopping elements 27 slidably fit. The stopping elements 27 pass through through-holes 28 in the housing 20. The slots 26 extend parallel to the line along which the pneumatic cylinder 22 operates and define a maximum displacement of the shoe 24 with respect to the housing 20.

When pressurizing the pneumatic cylinder 22 the piston rod 21 will travel from a retracted position to an extended position, hence moving the intermediate element in a direction away from the housing 20. During this movement the spring forces of the springs 29 increase. In the situation as shown in Figs. 6 and 10 the piston rod 21 is in its retracted position, in the situation as shown in Figs. 8 and 12 the piston rod 21 is in its extended position and in the situation as shown in Figs. 7 and 11 the piston rod 21 is in an intermediate position between the retracted position and the extended position. The stopping elements 27 and the slots 26 cooperate such that when the piston rod 21 of the pneumatic cylinder 22 is moving outwardly from its retracted position the shoe 24 is stopped by the stopping elements 27 when the piston rod 21 arrives at its intermediate position. When moving further from the intermediate position to the extended position the intermediate element 18 is also moved further outwardly with respect to the housing 20. This means that the first pivot 19 is also moved further, whereas the shoe 24 remains in place. This means that the stabbing element 15 will rotate about the axis of rotation of the second pivot 25. The range within which the piston rod 21 travels from its intermediate position to its extended position is short with respect to the distance that the piston rod 21 travels between its retracted position and its intermediate position.

When the pneumatic cylinder 22 is depressurized the springs 29 pull the intermediate element 18 back towards the housing 20 such that the piston rod 21 travels back to its retracted position. A stabbing element spring 30 causes the stabbing element 15 to rotate back to its original orientation. The shoe 24 is pulled back by the intermediate element 18.

Since the intermediate element 18 and the shoe 24 are displaceable in linear direction with respect to each other the axis of rotation of the second pivot 25 is movable with respect to the stabbing element 15 so as to allow the rotational movement of the stabbing element 15 about the axis of rotation of the second pivot 25. For that reason a pin of the second pivot 25 is movable within cooperating slots in the stabbing element 15. It is also possible that the pin of the second pivot 25 has a fixed position with respect to the stabbing element 15 whereas it is movable within cooperating slots in the shoe 24.

When the piston rod 21 travels from the retracted position to the intermediate position the cutting edge 16 of the stabbing element 15 follows a solely stabbing motion towards the weed plant W which must be removed. In other words, during the stabbing motion the cutting edge 16 follows a downwardly directed first path section which is linear in a direction from the proximal end 17 towards the cutting edge 16. Fig. 11 shows that the cutting edge 16 penetrates into the soil such that it approaches the roots of the weed plant W. Subsequently, the cutting edge 16 follows a second path section which is angled with respect to the first path section since it moves upwardly, see Figs. 8 and 12. The second path section provides the opportunity to pop out the weed plant W, including at least a part of its roots, and throwing it away. In the embodiment as shown in the figures, the stabbing element 15 follows the same path section with respect to the housing 20 during a return movement as during the forward movement, but in opposite direction.

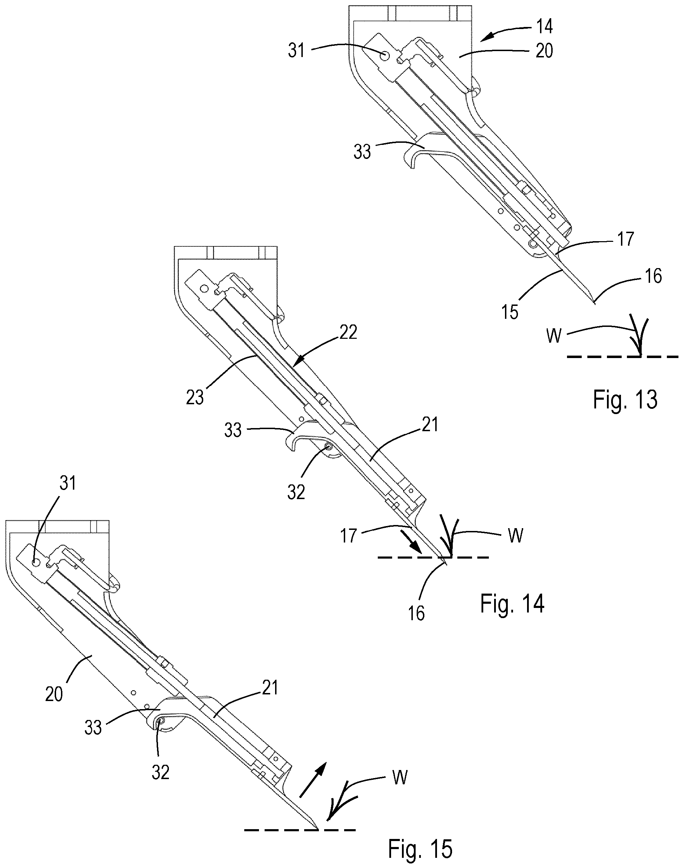

Figs. 13-15 show a weeding tool 14 of an alternative embodiment of the weed removing vehicle 1. Parts which are similar to parts of the weeding tool 14 as shown in Figs. 6-12 have the same reference number. In this embodiment the stabbing element 15 is an elongated flat blade including an arrow shaped cutting edge 16. The cylinder body 23 is accommodated in the housing 20 which is fixed to the subframe 7. The cylinder body 23 is mounted to the housing 20 through a pivot 31 which has an axis of rotation which has a component that is parallel to the direction of movement X of the weed removing tool. In this case the axis of rotation is parallel to the direction of movement X.

Figs. 13-15 show that a cam 32 is fixed to the housing 20, whereas a cooperating guide 33 is mounted to the piston rod 21. The cam 32 and the guide 33 are part of a guide mechanism of a rotating system for rotating the pneumatic cylinder 22 about the axis of rotation of the pivot 31 after the piston rod 21 has moved over a certain distance from its retracted position to its extended position. When the guide 33 engages the cam 32 at an intermediate position of the piston rod 21 between its retracted position and its extended position the piston rod 21 is forced upwardly as illustrated in Fig. 15. The range within which the piston rod 21 travels from its intermediate position to its extended position is short with respect to the distance that the piston rod 21 travels between its retracted position and its intermediate position.

Figs. 13-15 show successive positions of the piston rod 21 during a forward movement of the stabbing element 15 with respect to the housing 20: its retracted position, its intermediate position and its extended position. Between the retracted position and the intermediate position the cutting edge 16 follows a solely stabbing motion towards the weed plant W which must be removed. In other words, during the stabbing motion the cutting edge 16 follows a downwardly directed first path section which is linear in a direction from the proximal end 17 towards the cutting edge 16. Fig. 14 shows that the cutting edge 16 penetrates into the soil such that it approaches the roots of the weed plant W. Subsequently, the cutting edge 16 follows a second path section which is angled with respect to the first path section since it moves upwardly. The second path section provides the opportunity to pop out the weed plant W, including at least a part of its roots, and throwing it away. In the embodiment as shown in the figures, the stabbing element 15 follows the same path section with respect to the housing 20 during a return movement as during the forward movement, but in opposite direction.

Because of the orientations of the respective weeding tools 14 with respect to the chassis 2, each of the stabbing elements 15 moves within an imaginary plane, which is angled with respect to the plane of the bearing plate 4 and to the direction of movement X, both during the forward movement and the return movement of the cutting edge 16.

Furthermore, Figs. 1-4 show that the vehicle 1 comprises a plant squeezer 34 for lifting hanging leaves of the cultivated plants P which may not be destroyed by the stabbing elements 15. The plant squeezer 34 serves to make hidden weeds below the hanging leaves of the cultivated plants P visible such that the hanging leaves do not obstruct line of views of the respective cameras 13. The plant squeezer 34 comprises two elongated plates which extend in the same direction as the direction of movement X. The plates are fixed to the respective subframes 7. At a front side of the plant squeezer 34 which faces the direction of movement X of the weed removing vehicle 1 the plates are provided with converging end portions for gradually guiding hanging leaves of the cultivated plants P in upward direction during movement of the weed removing vehicle 1.

The invention is not limited to the embodiments shown in the drawings and described hereinbefore, which may be varied in different manners within the scope of the claims and their technical equivalents. For example, the number of cameras and weeding tools may be different. Furthermore, the first and second path sections which are followed by the distal ends of the respective stabbing elements may be generated by alternative displacing devices.

## Claims

1. A weed removing vehicle (1), comprising a frame (7, 20), a driving device for driving the weed removing vehicle (1) in a direction of movement (X) and a weed recognition system (13) for determining a location of weed (W) to be removed, a stabbing element (15) being mounted to the frame (7, 20) and having a free distal end (16) for removing weed (W) and an opposite proximal end (17), and a displacing device (18, 19, 21-33) for moving the stabbing element (15) relative to the frame (7, 20) in a forward movement to the weed (W) recognized by the weed recognition system (13) and a return movement, wherein the displacing device (18, 19, 21-33) is adapted such that in the forward movement the distal end (16) follows a kinked path comprising a downwardly directed first path section and a second path section, wherein a transition between the first and second path sections creates the kinked path.

2. A weed removing vehicle (1) according to claim 1, wherein the first path section is substantially linear.

3. A weed removing vehicle (1) according to claim 1 or 2, wherein the displacing device (18, 19, 21-33) is adapted such that during the forward movement the distal end (16) moves within an imaginary plane, which is angled with respect to a horizontal plane and to the direction of movement (X) of the weed removing vehicle (1).

4. A weed removing vehicle (1) according to any one of the preceding claims, wherein the first path section is inclined with respect to a vertical line, whereas the displacing device (18, 19, 21-33) is adapted such that during the forward movement the distal end (16) moves upwardly along the second path section.

5. A weed removing vehicle (1) according to any one of the preceding claims, wherein the displacing device (18, 19, 21-33) is adapted such that the distal end (16) follows the first and second path sections during the return movement in opposite direction with respect to the forward movement.

6. A weed removing vehicle (1) according to any one of the preceding claims, wherein the stabbing element (15) comprises an elongated body.

7. A weed removing vehicle (1) according to any one of the preceding claims, wherein the distal end comprises a cutting edge (16).

8. A weed removing vehicle (1) according to any one of the preceding claims, wherein the distal end (16) is arrow-shaped.

9. A weed removing vehicle (1) according to any one of the preceding claims, wherein the stabbing element (15) is gouge-shaped.

10. A weed removing vehicle (1) according to any one of the preceding claims, wherein the displacing device comprises a linear actuator (22), of which a first end is mounted to the frame (20) and an opposite second end is mounted to the stabbing element (15) through a first pivot (19) having an axis of rotation, wherein the linear actuator (22) is adapted and controllable such that during the forward movement the second end is moved with respect to the first end from a retracted position to an extended position, and wherein the displacing device comprises a rotating system (18, 24-30) for rotating the stabbing element (15) with respect to the second end about the axis of rotation of the first pivot (19), wherein the rotating system (18, 24-30) is adapted such that it rotates the stabbing element (15) when the second end is moved with respect to the first end to the extended position from an intermediate position, that lies between the retracted position and the extended position, hence forcing the distal end (16) to follow the second path section.

11. A weed removing vehicle (1) according to claim 10, wherein the rotating system comprises a shoe (24) which is movably mounted to the frame (20) and also mounted to the stabbing element through a second pivot (25) that has an axis of rotation which is parallel to the axis of rotation of the first pivot (19) and located at a distance therefrom in transverse direction of a line along which the linear actuator (22) operates, wherein the shoe (24) and the frame (20) are provided with a stop mechanism which is adapted such that when the second end is moved with respect to the first end from the retracted position to the extended position the shoe (24) is stopped with respect to the frame (20) at the intermediate position of the second end.

12. A weed removing vehicle (1) according to any one of the claims 1-9, wherein the displacing device comprises a linear actuator (22), of which a first end is mounted to the frame (20) through an actuator pivot (31) including an axis of rotation and an opposite second end is fixed to the stabbing element (15), wherein the linear actuator (22) is adapted and controllable such that during the forward movement the second end is moved with respect to the first end from a retracted position to an extended position, and wherein the displacing device comprises a rotating system (32, 33) for rotating the linear actuator (22) about the axis of rotation, wherein the rotating system (32, 33) is adapted such that it rotates the linear actuator (22) when the second end is moved with respect to the first end to the extended position from an intermediate position, that lies between the retracted position and the extended position, hence forcing the distal end (16) to follow the second path section.

13. A weed removing vehicle (1) according to claim 12, wherein the rotating system comprises a guide mechanism between the second end of the linear actuator (22) and the frame (20), which is provided with a cam (32) and a guide (33) which engage each other between the intermediate position and the extended position of the second end, wherein the cam (32) may be mounted to the frame (20) and the guide (33) may be mounted to the second end of the linear actuator (22).

14. A weed removing vehicle (1) according to any one of the preceding claims, wherein the frame (7) is mounted to a chassis (2, 4) of the vehicle (1) and liftable with respect to the chassis (2, 4), displaceable with respect to the chassis (2, 4) in a direction which is angled with respect to the direction of movement (X) of the weed removing vehicle (1) and an upwardly directed axis and rotatable with respect to the chassis (2, 4) about the upwardly directed axis.

15. A weed removing vehicle (1) according to any one of the preceding claims, which is an autonomously operating weed removing vehicle or a semi-autonomously operating weed removing vehicle.
